# EUROPÄISCHE PATENTANMELDUNG

(11) **EP 4 193 819 A1**
(43) Veröffentlichungstag der Anmeldung: **14.06.2023**
(21) Anmeldenummer: 22202695.7
(22) Anmeldetag: 20.10.2022
(51) Int. Cl.: A01B 69/04

(54) **LANDWIRTSCHAFTLICHE ARBEITSMASCHINE**

(30) Priorität: 07.12.2021 DE 102021132200
(71) Anmelder: CLAAS Tractor S.A.S., 78141 Vélizy-Villacoublay Cedex (FR)
(72) Erfinder: Birkmann, Christian, 33775 Versmold (DE); Wieckhorst, Jan Carsten, 29525 Uelzen Orsteil Hanstedt 2 (DE); Pieper, Jona, 59394 Nordkirchen (DE); Heydekorn, Jens, 33428 Harsewinkel (DE)
(74) Vertreter: CLAAS Gruppe

(57) **Zusammenfassung**

Die Erfindung betrifft eine landwirtschaftliche Arbeitsmaschine zur Feldbearbeitung, wobei die landwirtschaftliche Arbeitsmaschine (1) zur Feldbearbeitung mit einem Anbaugerät (2) bestückt und/oder mit einem Anhänger (3) verbunden werden kann, wobei die landwirtschaftliche Arbeitsmaschine (1) ein Fahrerassistenzsystem (5) aufweist, wobei das Fahrerassistenzsystem (5) eine Benutzerschnittstelle (6) aufweist, wobei die landwirtschaftliche Arbeitsmaschine (1) ein Fahrwerk (9) mit den Boden (10) kontaktierenden Fahrwerkselementen (11) aufweist, wobei das Fahrerassistenzsystem (5) in einer Planungsroutine dialogbasiert eine Planung der Feldbearbeitung erstellt und in einer Durchführungsroutine, insbesondere basierend auf der Planung der Feldbearbeitung in der Planungsroutine, mindestens ein Arbeitsaggregat (13) der landwirtschaftlichen Arbeitsmaschine (1) durch Einstellung von Maschinenparametern an dem Arbeitsaggregat (13) steuert und/oder regelt, wobei das Fahrerassistenzsystem (5) basierend auf der Planung der Feldbearbeitung ein Bodenverdichtungsrisiko der Feldbearbeitung durch die landwirtschaftliche Arbeitsmaschine (1) nach einer Berechnungsvorschrift ermittelt und dem Benutzer (12) über die Benutzerschnittstelle (6) anzeigt.

## Beschreibung

Die vorliegende Erfindung betrifft eine landwirtschaftliche Arbeitsmaschine zur Feldbearbeitung gemäß Anspruch 1 sowie ein Verfahren zur Ermittlung eines Bodenverdichtungsrisikos gemäß Anspruch 15.

Im Vordergrund stehen vorliegend landwirtschaftliche Arbeitsmaschinen aller Art. Dies betrifft Zugmaschinen, insbesondere Traktoren, aber auch Erntemaschinen wie Mähdrescher und Feldhäcksler. Diese können mit einem Anbaugerät, beispielsweise über eine Geräteschnittstelle wie einen Heckkraftheber oder einen Frontkraftheber, ausgestattet werden. Sie können zusätzlich oder alternativ einen Anhänger ziehen. Die landwirtschaftlichen Arbeitsmaschinen, und ggf. das Anbaugerät oder der Anhänger, werden üblicherweise zur Feldbearbeitung verwendet.

Problematisch ist, dass diese landwirtschaftlichen Arbeitsmaschinen inklusive der Anbaugeräte oder Anhänger immer größer und schwerer werden. Speziell durch ihr Gewicht verdichten sie den Boden unter sich bei der Feldbefahrung, insbesondere der Feldbearbeitung. Wird der Boden zu sehr verdichtet, kann dies das Wachstum von Pflanzen deutlich hemmen. Dadurch wird der Ertrag des Feldes reduziert. Dies soll nach Möglichkeit vermieden oder reduziert werden.

Es ist jedoch so, dass die Bodenverdichtung nicht nur von dem Gewicht der landwirtschaftlichen Arbeitsmaschine abhängt, sondern auch von deren Gewichtsverteilung, Bodeneigenschaften wie Tonanteil und Feuchtigkeit, Eigenschaften und Luftdruck der Reifen oder Eigenschaften eines Raupenlaufwerks und dergleichen.

Ein bekannter Stand der Technik (DE 10 2009 025 438 A1) offenbart die Abschätzung von Bodenverdichtungen durch Feldbearbeitungen über mehrere Feldbearbeitungen hinweg und abhängig von befahrenen und geplanten Fahrtrouten. Zur Ermittlung dieser Bodenverdichtungen ist ein Leitrechner vorgesehen, der mit diversen landwirtschaftlichen Arbeitsmaschinen in Kommunikation steht. Dieser kann zwar grundsätzlich auch auf einer der landwirtschaftlichen Arbeitsmaschinen mitgeführt werden, nichtsdestotrotz verlangt die komplexe Berechnungsmethode eine hohe Rechenleistung und eine entsprechende Kommunikationsanbindung mit den übrigen landwirtschaftlichen Arbeitsmaschinen und weiteren Datenbanken.

Weiterhin ist unter dem Namen "Terranimo" ein Tool bekannt, das auf Basis diverser Eingaben zur landwirtschaftlichen Arbeitsmaschine, Reifen- und Bodeneigenschaften usw. ein Bodenverdichtungsrisiko abschätzen kann. Dieses Tool ist wissenschaftlich konzipiert, es erfordert eine detaillierte Einarbeitung und das Eingeben vieler Parameter. Im Gegenzug erhält der Benutzer eine qualitativ hochwertige Vorhersage des Bodenverdichtungsrisikos.

Es ist dabei eine Herausforderung, das Bodenverdichtungsrisiko auf einfache Art und Weise schnell und pragmatisch abzuschätzen. In vielen Situationen ist das Bedienen eines komplexen Tools schlicht zu arbeitsintensiv, um realistisch verwendet zu werden. Gleichzeitig soll die Qualität der Vorhersage des Bodenverdichtungsrisikos angemessen hoch sein.

Der Erfindung liegt das Problem zugrunde, die bekannte landwirtschaftliche Arbeitsmaschine derart auszugestalten und weiterzubilden, dass hinsichtlich der genannten Herausforderung eine weitere Optimierung erreicht wird.

Das obige Problem wird durch die Merkmale von Anspruch 1 gelöst.

Wesentlich ist die grundsätzliche Überlegung, dass ein Bodenverdichtungsrisiko mit wenigen, gezielten Vereinfachungen der Berechnungsmethode auch von einem Fahrerassistenzsystem einer landwirtschaftlichen Arbeitsmaschine vorgenommen werden kann. Besonders vorteilhaft ist dabei, dass diverse der benötigten Parameter zur Ermittlung des Bodenverdichtungsrisikos dem Fahrerassistenzsystem bereits bekannt sind oder von einem Benutzer in einer Planungsroutine einer Feldbearbeitung sowieso eingegeben werden. Die Anzeige des Bodenverdichtungsrisikos kann somit quasi als Nebenprodukt mit erfolgen, wodurch dem Benutzer auf unkomplizierte Art und Weise und unter Einbindung in bestehende Arbeitsprozesse ein Mittel zur Vermeidung von hoher Bodenverdichtung an die Hand gegeben wird. Dabei werden Fehler durch manuelle Wertänderungen vermieden und Doppeleingaben sind ebenfalls nicht notwendig. Weiterhin kann die Nutzung auf der landwirtschaftlichen Arbeitsmaschine vor oder sogar während der Feldbearbeitung erfolgen.

Im Einzelnen wird eine landwirtschaftliche Arbeitsmaschine zur Feldbearbeitung, wobei die landwirtschaftliche Arbeitsmaschine zur Feldbearbeitung mit einem Anbaugerät bestückt und/oder mit einem Anhänger verbunden werden kann, wobei die landwirtschaftliche Arbeitsmaschine ein Fahrerassistenzsystem aufweist, wobei das Fahrerassistenzsystem eine Benutzerschnittstelle aufweist, wobei die landwirtschaftliche Arbeitsmaschine ein Fahrwerk mit den Boden kontaktierenden Fahrwerkselementen aufweist, wobei das Fahrerassistenzsystem in einer Planungsroutine dialogbasiert eine Planung der Feldbearbeitung erstellt und in einer Durchführungsroutine, insbesondere basierend auf der Planung der Feldbearbeitung in der Planungsroutine, mindestens ein Arbeitsaggregat der landwirtschaftlichen Arbeitsmaschine durch Einstellung von Maschinenparametern an dem Arbeitsaggregat steuert und/oder regelt, wobei das Fahrerassistenzsystem basierend auf der Planung der Feldbearbeitung ein Bodenverdichtungsrisiko der Feldbearbeitung durch die landwirtschaftliche Arbeitsmaschine nach einer Berechnungsvorschrift ermittelt und dem Benutzer über die Benutzerschnittstelle anzeigt, vorgeschlagen.

Es kann vorgesehen sein, dass der Benutzer in der Planungsroutine eine Bodeneigenschaft eingibt, insbesondere auswählt. Diese Eingabe kann Teil der Planung der Feldbearbeitung sein und zusätzlich zur Ermittlung des Bodenverdichtungsrisikos verwendet werden. So kann das Bodenverdichtungsrisiko ohne weiteren Aufwand seitens des Benutzers mit hoher Präzision abgeschätzt werden. Diese Ausgestaltung ist Gegenstand von Anspruch 2.

Bei einer Ausgestaltung gemäß Anspruch 3 können diverse Parameter, die dem Fahrerassistenzsystem bereits bekannt sind und/oder die als Ergebnis der Planungsroutine für die Feldbearbeitung sowieso eingestellt und/oder dem Benutzer vorgeschlagen werden, verwendet werden, um das Bodenverdichtungsrisiko zu ermitteln. So ist ebenfalls ohne Mehraufwand für den Benutzer eine präzise Ermittlung des Bodenverdichtungsrisikos möglich. Je nach Feldbearbeitung sind am Ende der Planungsroutine dem Fahrerassistenzsystem bereits alle benötigten Daten definitiv bekannt oder es hat zumindest Vorschläge für deren Einstellung an den Benutzer übermittelt. Diese Erkenntnis erlaubt eine präzise Ermittlung des Bodenverdichtungsrisikos als Nebenprodukt der Planungsroutine.

Bei dem bekannten Onlinetool "Terranimo" werden die Eingangsparameter für die Achslasten der landwirtschaftlichen Arbeitsmaschine und ggf. des Anbaugerätes und/oder Anhängers mit ungefähren Werten eines generischen Ersatzmodells ermittelt. Gemäß Anspruch 4 können dann vorliegend die hochgenauen Daten des Fahrerassistenzsystems, das seine landwirtschaftliche Arbeitsmaschine im Detail kennt, verwendet werden, um Achslasten mit höherer Genauigkeit abzuschätzen. Zusätzlich oder alternativ kann auch ein Achslastmesssystem vorhanden sein.

Da das Fahrerassistenzsystem diverse Einstellungen und Maschinenparameter der landwirtschaftlichen Arbeitsmaschine und ggf. des Anbaugerätes und/oder Anhängers und deren Variationsmöglichkeiten kennt, ist in einer bevorzugten Ausgestaltung gemäß Anspruch 5 vorgesehen, dass das Fahrerassistenzsystem dem Benutzer mindestens einen Vorschlag zur Reduktion des Bodenverdichtungsrisikos anzeigt. Ggf. kann das Fahrerassistenzsystem diesen Vorschlag auch selbsttätig umsetzen.

Bei einer Ausgestaltung gemäß Anspruch 6 ist vorgesehen, dass das Fahrerassistenzsystem die Abarbeitung der Berechnungsvorschrift vollständig auf der Hardware der landwirtschaftlichen Arbeitsmaschine vornimmt. So kann das Bodenverdichtungsrisiko vor Ort, schnell und beispielsweise auch ohne Internetanbindung ermittelt werden.

Eine detaillierte Information des Benutzers und eine erhöhte Genauigkeit können bei einer Ausgestaltung gemäß Anspruch 7 dadurch erreicht werden, dass das Fahrerassistenzsystem das Bodenverdichtungsrisiko nach der Berechnungsvorschrift für mindestens ein Fahrwerkselement separat ermittelt. Wird dem Benutzer nicht nur ein Gesamtrisiko angezeigt, sondern das Risiko beispielsweise pro Reifen, pro Raupe oder pro Achse, kann der Benutzer selbst Maßnahmen ergreifen, um das Bodenverdichtungsrisiko zu reduzieren. Weiterhin hängt das Bodenverdichtungsrisiko maßgeblich vom Bodenkontakt ab, der wiederum auf einfache Art und Weise pro Fahrwerkselement betrachtbar ist.

Die Ansprüche 8 bis 11 geben bevorzugte Ausgestaltungen der Berechnungsvorschrift an, die daraufhin optimiert sind, mit wenig Rechenleistung und unter Verwendung der dem Fahrerassistenzsystem bekannten Daten eine hohe Genauigkeit bei der Ermittlung des Bodenverdichtungsrisikos zu erreichen. Gemäß Anspruch 8 kann dabei eine kleine Menge diskreter Tiefen unterschieden werden, für die das Bodenverdichtungsrisiko ermittelt wird.

Es wurde erkannt, dass die Bodenverdichtung in Relation zum Fahrwerkselement meist ein oder zwei Maxima pro Tiefe in Längs- und Querrichtung des Fahrwerkselements aufweist. Bei der bevorzugten Ausgestaltung gemäß Anspruch 9 wird daher vorgeschlagen, das Bodenverdichtungsrisiko in Längs- und Querrichtung nur an wenigen Tiefen-Stützstellen pro Tiefe zu ermitteln. Dadurch, dass die Berechnung auf die Positionen der theoretischen Maxima beschränkt wird, kann gegenüber den üblichen Berechnungen vieler Bodendrücke pro Tiefe ein Großteil der Rechenleistung eingespart werden.

Anspruch 10 gibt in Relation zu Rädern und Raupenlaufwerken die bevorzugte Positionierung einer die Tiefen-Stützstellen umfassenden Ebene an. Diese orientiert sich an den zu erwartenden Maxima des Bodendrucks.

Neben den Tiefen-Stützstellen ist auch relevant, an welchen Auflage-Stützstellen eine Auflagefläche an das Fahrwerkselement auf dem Boden der Auflagedruck des Fahrwerkselements auf den Boden zur Ermittlung des Bodenverdichtungsrisikos berücksichtigt wird. Anspruch 11 gibt bevorzugte Ausgestaltungen der Auflage-Stützstellen an.

Die Ansprüche 12 und 13 betreffen eine bevorzugte Darstellung des Bodenverdichtungsrisikos über die Benutzerschnittstelle, die für den Benutzer eine einfache Möglichkeit darstellt, das Bodenverdichtungsrisiko auf einen Blick zu erkennen und mögliche Gegenmaßnahmen abzuleiten. Diese pragmatische und kompakte Darstellung ist sehr gut dazu geeignet, einen Ausgleich zwischen Informationstiefe und unerwünschter Komplexität zu schaffen. Das Ziel dabei ist, dem Benutzer integriert in seinen Arbeitsablauf eine Information über das Bodenverdichtungsrisiko zur Verfügung zu stellen. Mittels der bereits geschilderten technischen Integration und der optischen Integration der Ansprüche 12 und 13 kommt die vorschlagsgemäße Lösung diesem Ziel näher.

Raupenlaufwerke können sich bei Zugbelastung etwas anstellen, wodurch sie unter Zug eine andere Verteilung ihres Auflagedrucks und somit des Bodendrucks aufweisen als im statischen Zustand. Vorliegend wird dies bei der Ausgestaltung gemäß Anspruch 14 berücksichtigt, wodurch sich eine verbesserte Abschätzung des Bodenverdichtungsrisikos bei Raupenlaufwerken ergibt.

Nach einer weiteren Lehre gemäß Anspruch 15, der eigenständige Bedeutung zukommt, wird ein Verfahren zur Ermittlung eines Bodenverdichtungsrisikos, wobei das Bodenverdichtungsrisiko mittels des Fahrerassistenzsystems einer landwirtschaftlichen Arbeitsmaschine nach einem der vorhergehenden Ansprüche ermittelt wird, beansprucht.

Auf alle Ausführungen zu der landwirtschaftlichen Arbeitsmaschine darf verwiesen werden.

Im Folgenden wird die Erfindung anhand einer lediglich Ausführungsbeispiele darstellenden Zeichnung näher erläutert. In der Zeichnung zeigt
- Fig. 1: eine vorschlagsgemäße landwirtschaftliche Arbeitsmaschine mit einer Benutzerschnittstelle des Fahrerassistenzsystems, die ein Bodenverdichtungsrisiko visualisiert,
- Fig. 2: Visualisierungsmöglichkeiten des Bodenverdichtungsrisikos für unterschiedliche landwirtschaftliche Arbeitsmaschinen,
- Fig. 3: weitere Visualisierungsmöglichkeiten des Bodenverdichtungsrisikos für einen Traktor und
- Fig. 4: schematisch Teile der Grundlagen der Berechnungsvorschrift.

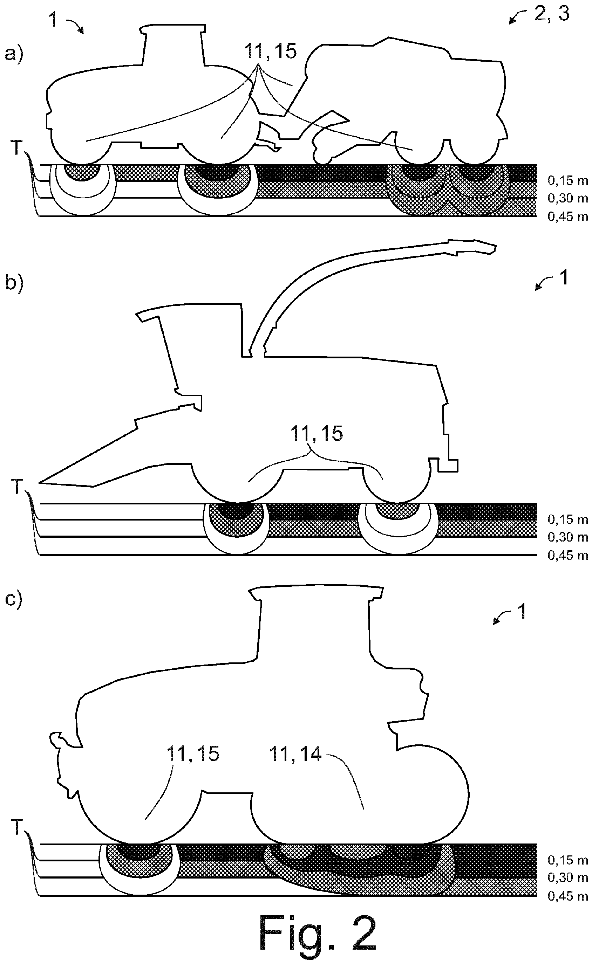

Das in den Figuren dargestellte und insoweit bevorzugte Ausführungsbeispiel betrifft eine landwirtschaftliche Arbeitsmaschine 1 zur Feldbearbeitung. Bei der landwirtschaftlichen Arbeitsmaschine 1 kann es sich um eine Zugmaschine, beispielsweise einen Traktor, handeln. Ebenso kann es sich um eine Erntemaschine wie einen Mähdrescher oder einen Feldhäcksler handeln. Einige Varianten landwirtschaftlicher Arbeitsmaschinen 1 sind in Fig. 2 dargestellt.

Die landwirtschaftliche Arbeitsmaschine 1 kann zur Feldbearbeitung mit einem Anbaugerät 2 bestückt und/oder mit einem Anhänger 3 verbunden werden. Das Anbaugerät 2 kann an einem Frontkraftheber oder einem Heckkraftheber 4 gelagert sein. Auf die genaue Abgrenzung zwischen Anbaugerät 2 und Anhänger 3 kommt es zumeist nicht an, es sei jedoch angemerkt, dass ein Anbaugerät 2 an der landwirtschaftlichen Arbeitsmaschine 1 getragen wird, während ein Anhänger 3 nur gezogen wird. Aufgesattelte Anbaugeräte 2 mit eigenem Fahrwerk werden daher hier als Anbaugeräte 2 betrachtet.

Die landwirtschaftliche Arbeitsmaschine 1 weist ein Fahrerassistenzsystem 5 auf. Das Fahrerassistenzsystem 5 weist eine Benutzerschnittstelle 6 auf. Die Benutzerschnittstelle 6 ist hier und vorzugsweise ein Terminal 7 in der Fahrerkabine der landwirtschaftlichen Arbeitsmaschine 1 und weist ein Display 8, insbesondere einen Touchscreen auf.

Die landwirtschaftliche Arbeitsmaschine 1 weist weiterhin ein Fahrwerk 9 mit den Boden 10 kontaktierenden Fahrwerkselementen 11 auf. Das Anbaugerät 2 und/oder der Anhänger 3 kann zusätzlich ein eigenes Fahrwerk 9 mit eigenen Fahrwerkselementen 11 aufweisen.

Möchte der Benutzer 12 nun ein Feld bearbeiten, kann das Fahrerassistenzsystem 5 in einer Planungsroutine dialogbasiert eine Planung der Feldbearbeitung erstellen und in einer Durchführungsroutine, insbesondere basierend auf der Planung der Feldbearbeitung in der Planungsroutine, mindestens ein Arbeitsaggregat 13 der landwirtschaftlichen Arbeitsmaschine 1 durch Einstellung von Maschinenparametern an dem Arbeitsaggregat 13 steuern und/oder regeln.

Weiterhin ist es nun so, dass das Fahrerassistenzsystem 5 basierend auf der Planung der Feldbearbeitung ein Bodenverdichtungsrisiko der Feldbearbeitung durch die landwirtschaftliche Arbeitsmaschine 1 nach einer Berechnungsvorschrift ermittelt und dem Benutzer 12 über die Benutzerschnittstelle 6 anzeigt.

Das Fahrerassistenzsystem 5 steuert die landwirtschaftliche Arbeitsmaschine 1, indem es Maschinenparameter an Arbeitsaggregaten 13 der landwirtschaftlichen Arbeitsmaschine 1 nach Art einer Steuerung und/oder Regelung einstellt. Es ist somit direkt in die Funktionen der landwirtschaftlichen Arbeitsmaschine 1 eingebunden. Es stellt weiterhin eine Schnittstelle zum Benutzer 12 bereit, der über das Fahrerassistenzsystem 5 die Steuerung der landwirtschaftlichen Arbeitsmaschine 1 optimieren kann. Außerdem unterbreitet das Fahrerassistenzsystem 5 dem Benutzer 12 vorzugsweise Vorschläge zur Optimierung der landwirtschaftlichen Arbeitsmaschine 1. Es kann vorgesehen sein, dass das Fahrerassistenzsystem 5 die landwirtschaftliche Arbeitsmaschine 1 lenkt und vorzugsweise fährt. Hier und vorzugsweise basiert das Fahrerassistenzsystem 5, insbesondere vollständig, auf Hardware der landwirtschaftlichen Arbeitsmaschine 1.

Bei den Maschinenparametern kann es sich um Maschinenparameter im engen Sinne wie die Motordrehzahl oder eine Position einer Drosselklappe handeln. Ebenso sind Einstellungen des Heckkrafthebers 4 und dergleichen umfasst. Die Maschinenparameter können auch Anweisungen an Einstellautomaten oder andere Steuerungssysteme der landwirtschaftlichen Arbeitsmaschine 1 umfassen, aus denen dann Maschinenparameter im engen Sinne generiert werden.

Bei den Fahrwerkselementen 11 kann es sich um Räder oder Raupenlaufwerke 14 oder dergleichen handeln. Ausführungen zu den Fahrwerkselementen 11 der landwirtschaftlichen Arbeitsmaschine 1 können jeweils auch für Fahrwerkselemente 11 des Anbaugerätes 2 und/oder des Anhängers 3 gelten.

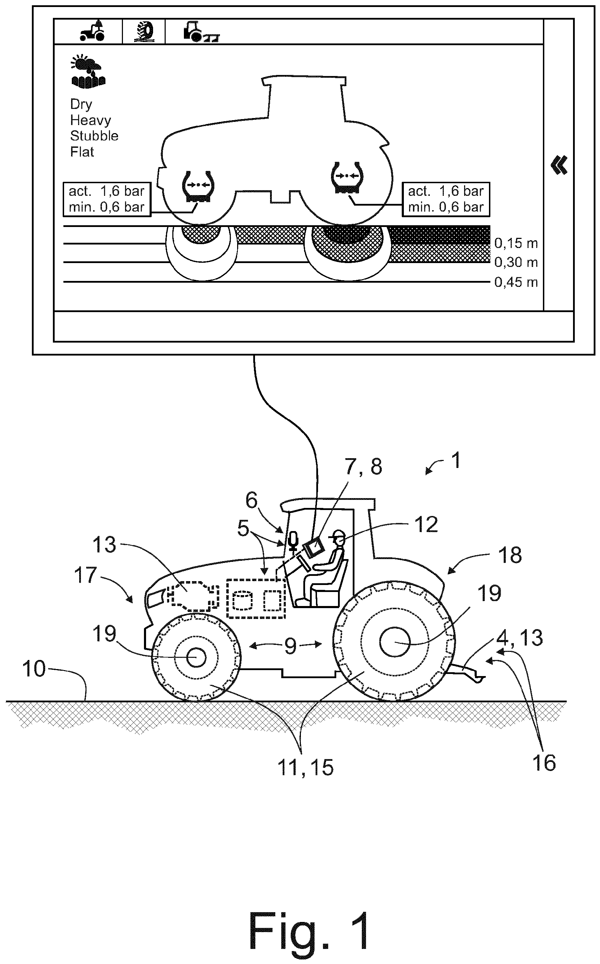

Bei der Planungsroutine handelt es sich um eine dedizierte Planung einer Feldbearbeitung im dialogbasierten Zusammenspiel von Benutzereingaben und Berechnungen durch das Fahrerassistenzsystem 5. Die Planungsroutine kann zu Vorschlägen insbesondere für eine Achsballastierung und Reifendrücke führen. So zeigt das Fahrerassistenzsystem in Fig. 1 beispielsweise aktuelle und vorgeschlagene Reifendrücke auf dem Display 8 an.

Die Durchführungsroutine betrifft die Umsetzung der Planung aus der Planungsroutine, insbesondere indem das Fahrerassistenzsystem 5 basierend auf der Planung Maschinenparameter an der landwirtschaftlichen Arbeitsmaschine 1 einstellt.

Der Begriff "basierend auf" bedeutet, dass ein Wert, eine Empfehlung, eine Routine oder dergleichen unter Nutzung, in einer nicht völlig irrelevanten Art und Weise, der Grundlage auf der der Wert oder die Empfehlung oder die Routine "basiert", erstellt oder durchgeführt wird. In jedem einzelnen Fall ist dabei bevorzugt, dass das Erstellen oder Durchführen oder dergleichen im Wesentlichen auf der Grundlage basiert. Am konkreten Beispiel bedeutet die Ermittlung des Bodenverdichtungsrisiko basierend auf der Planung, dass ein oder mehrere bei der Planung berücksichtigte, insbesondere vom Benutzer 12 dialogbasiert eingegebene, Parameter oder Ergebnisse der Planung zur Ermittlung des Bodenverdichtungsrisikos beitragen. Wie noch erläutert wird, basiert die Ermittlung des Bodenverdichtungsrisikos vorzugsweise primär oder vollständig auf der Planung und Daten, die im Fahrerassistenzsystem 5 hinterlegt sind.

Arbeitsaggregate 13 sind beispielsweise ein Motor, ein Schneidwerk, ein Heckkraftheber 4 und dergleichen.

Es versteht sich, dass das Fahrerassistenzsystem 5 der landwirtschaftlichen Arbeitsmaschine 1 hier jeweils ausgestaltet ist, die Routinen und deren Schritte durchzuführen. Ebenso ist es dazu ausgestaltet, Benutzereingaben zu Empfangen und entsprechend zu verarbeiten.

Eine bevorzugte Ausführungsform der Berechnungsvorschrift wird im Folgenden noch erläutert.

Die Planungsroutine wird hier und vorzugsweise dialogbasiert von dem Fahrerassistenzsystem 5 und dem Benutzer 12 über die Benutzerschnittstelle 6, vorzugsweise das Terminal 7, durchgeführt. Grundsätzlich können dabei Bodenkarten und GPS zum Einsatz kommen. Allerdings führt eine Ermittlung des Bodenverdichtungsrisikos auf Basis von Bodenkarten zwar zu einem genauen, jedoch auch zu einem komplizierten Ergebnis. Eine pragmatische Einschätzung des gesamten Feldes bzw. der gesamten Feldbearbeitung wird damit deutlich erschwert. Wie noch erläutert werden wird, ist daher vorzugsweise die Darstellung des Bodenverdichtungsrisikos positionsunabhängig oder wird nur für wenige große Bereiche eines Feldes dargestellt.

Als simple Alternative zu einer Bodenkarte kann vorgesehen sein, dass in der Planungsroutine der Benutzer 12 eine Eingabe, insbesondere eine Auswahl, mindestens einer Bodeneigenschaft vornimmt und dass das Fahrerassistenzsystem 5 das Bodenverdichtungsrisiko nach der Berechnungsvorschrift basierend auf der Bodeneigenschaft ermittelt. Vorzugsweise umfasst die mindestens eine Bodeneigenschaft einen Tonanteil und/oder eine Bodenfeuchtigkeit und/oder einen Humusanteil als Bodeneigenschaft.

Die Auswahl der Bodeneigenschaft erfolgt hier und vorzugsweise als Auswahl aus wenigen möglichen Werten und insbesondere indirekt oder natürlichsprachig. Indirekt meint dabei, dass beispielsweise nicht ein prozentualer Tonanteil ausgewertet wird, sondern dass der Benutzer 12 auswählt, ob es sich um einen leichten, mittleren oder schweren Boden 10 handelt und der Tonanteil auf Basis dieser Angabe vom Fahrerassistenzsystem 5 geschätzt wird. Dafür können übliche Werte des Tonanteils für einen leichten, mittleren und schweren Boden 10 im Fahrerassistenzsystem 5 hinterlegt sein. Diese relativ grobe Schätzung führt zwar zu einer Verminderung der Genauigkeit, ermöglicht jedoch die Ermittlung des Bodenverdichtungsrisikos auf einfache, komfortable Art und Weise und ohne, dass der Benutzer 12 eine Bodenprobe analysieren oder Bodeneigenschaften nachschauen oder anderweitig ermitteln müsste. Somit kann der Benutzer 12 das Bodenverdichtungsrisiko auch spontan vor Beginn einer Feldbearbeitung oder während der Feldbearbeitung ermitteln. Dies wiederum führt zu einer häufigeren Ermittlung des Bodenverdichtungsrisikos und somit insgesamt zu einer Bodenschonung. Für größere Planungen kann der Benutzer 12 gelegentlich zusätzlich auf andere, komplexere Systeme zurückgreifen. Eine analoge Auswahl kann für die Bodenfeuchtigkeit verwendet werden, wobei der Benutzer 12 beispielsweise auswählt, ob der Boden 10 feucht, mittel oder trocken ist. Fig. 1 zeigt entsprechende natürlichsprachige, bereits ausgewählte, Bodeneigenschaften im linken oberen Bereich der Anzeige.

Weiter ist hier und vorzugsweise vorgesehen, dass das Fahrerassistenzsystem 5 das Bodenverdichtungsrisiko nach der Berechnungsvorschrift weiterhin basierend auf einem Gewicht der landwirtschaftlichen Arbeitsmaschine 1 und/oder des Anbaugerätes 2 und/oder des Anhängers 3 und/oder basierend auf einer Achsballastierung, insbesondere einer in der Planungsroutine von dem Fahrerassistenzsystem 5 empfohlenen Achsballastierung, und/oder basierend auf einem Luftdruck eines Reifens 15 der landwirtschaftlichen Arbeitsmaschine 1, insbesondere einem in der Planungsroutine von dem Fahrerassistenzsystem 5 empfohlenen Luftdruck, ermittelt.

Wie bereits erwähnt können in der Planungsroutine eine Achsballastierung und/oder ein Luftdruck für einen oder mehrere Reifen 15 der landwirtschaftlichen Arbeitsmaschine 1 im Rahmen der Planung vorgeschlagen werden. Unter Umständen stimmen diese Werte zwar nicht mit der Realität überein, sie können dennoch die Grundlage für die Ermittlung des Bodenverdichtungsrisikos bilden und, wie Fig. 1 zeigt, dem Benutzer 12 zusätzlich angezeigt werden. So wird der Benutzer 12 davon entlastet, die realen Werte einzugeben und/oder es kann auch eine Schätzung des Bodenverdichtungsrisikos ermittelt werden, wenn der Benutzer 12 diese Eingabe schlicht nicht vornimmt. Gleichzeitig erkennt der Benutzer 12, auf welcher Grundlage die Ermittlung des Bodenverdichtungsrisikos basiert.

Als Vorschlag für den Luftdruck des Reifens 15 kann beispielsweise ein minimaler Luftdruck des Reifens 15 nach Spezifikation unter Berücksichtigung der Achslast verwendet werden.

Weiterhin können für die Ermittlung des Bodenverdichtungsrisikos der Typ der landwirtschaftlichen Arbeitsmaschine 1, der Typ des Anbaugerätes 2 und/oder Anhängers 3 und/oder der Typ des Reifens 15 mit ihren entsprechenden Spezifikationen verwendet werden. Auch eine automatische Erkennung des Anbaugerätes 2 und/oder Anhängers 3 ist möglich. Diese Daten können bereits im Fahrerassistenzsystem 5 hinterlegt sein.

Es kann vorgesehen sein, dass das Fahrerassistenzsystem 5 das Bodenverdichtungsrisiko nach der Berechnungsvorschrift weiterhin basierend auf mindestens einer Achslast der landwirtschaftlichen Arbeitsmaschine 1 ermittelt. Die Achslast kann eine gemessene oder eine geschätzte Achslast sein.

Vorzugsweise wird dabei das Fahrerassistenzsystem 5 die geschätzte Achslast basierend auf einem Gewicht und/oder einer Achslast und/oder einem Schwerpunkt des Anbaugerätes 2 und/oder Maschinenparametern einer Schnittstelle, insbesondere eines Heckkrafthebers 4, der landwirtschaftlichen Arbeitsmaschine 1, über die das Anbaugerät 2 mit der landwirtschaftlichen Arbeitsmaschine 1 verbunden ist, schätzen. Dabei ist der Zusammenhang so, dass sich aus den Achslasten des Anbaugerätes 2, die bei diesem beispielsweise relativ konstant und bekannt sein können, der Schwerpunkt des Anbaugerätes 2 ergibt, der im Zusammenspiel mit der Anbindung des Anbaugerätes 2 an die landwirtschaftliche Arbeitsmaschine 1 den Einfluss des Anbaugerätes 2 auf die Achslast der landwirtschaftlichen Arbeitsmaschine 1 ergibt. Alternativ kann ein Achslastmesssystem vorhanden sein.

Die berücksichtigten Parameter fließen dabei grundsätzlich in die Berechnungsvorschrift ein, wobei dies weit zu verstehen ist. Sie können Teil einer konkreten Formel sein, einen Korrekturfaktor bilden, zur Auswahl einer Formel genutzt werden und dergleichen.

Es kann auch vorgesehen sein, dass das Fahrerassistenzsystem 5 dem Benutzer 12 mindestens einen Vorschlag zur Reduktion des Bodenverdichtungsrisikos basierend auf dem ermittelten Bodenverdichtungsrisiko anzeigt, und/oder, dass das Fahrerassistenzsystem 5 das Bodenverdichtungsrisiko automatisiert und/oder nach Annahme eines Vorschlages durch den Benutzer 12 durch Einstellung mindestens eines Maschinenparameters an der landwirtschaftlichen Arbeitsmaschine 1 und/oder dem Anbaugerät 2 und/oder dem Anhänger 3 verringert.

Zum einen kann der Benutzer 12 selbst auf einfache Art und Weise das Bodenverdichtungsrisiko an der Benutzerschnittstelle 6 ablesen und Maßnahmen treffen. Genauso kann jedoch auch das Fahrerassistenzsystem 5 potentielle und grundsätzlich im Rahmen der geplanten Feldbearbeitung sinnvolle Veränderungen über die Berechnungsvorschrift simulieren und dem Benutzer 12 darauf basierend Vorschläge zur Verringerung des Bodenverdichtungsrisikos machen.

Weiter ist hier und vorzugsweise vorgesehen, dass das Fahrerassistenzsystem 5 die Abarbeitung der Berechnungsvorschrift und vorzugsweise die komplette Ermittlung des Bodenverdichtungsrisikos auf Hardware der landwirtschaftlichen Arbeitsmaschine 1 vornimmt.

Es kann auch vorgesehen sein, dass zur Ermittlung des Bodenverdichtungsrisikos keine Kommunikation mit Systemen außerhalb der landwirtschaftlichen Arbeitsmaschine 1 nötig ist, da alle notwendigen Daten bereits vorhanden sein können und/oder vom Benutzer 12 eingegeben werden. So kann das Bodenverdichtungsrisiko in praktisch jeder Situation ermittelt werden.

Möglich ist außerdem, dass das Fahrerassistenzsystem 5 das Bodenverdichtungsrisiko nach der Berechnungsvorschrift für mindestens ein Fahrwerkselement 11 separat ermittelt. Vorzugsweise ist es dabei so, dass das Fahrerassistenzsystem 5 das Bodenverdichtungsrisiko nach der Berechnungsvorschrift für alle Fahrwerkselemente 11 einer Längsseite 16 und/oder der Vorderseite 17 und/oder der Hinterseite 18 und/oder einer Achse 19 der landwirtschaftlichen Arbeitsmaschine 1 ermittelt.

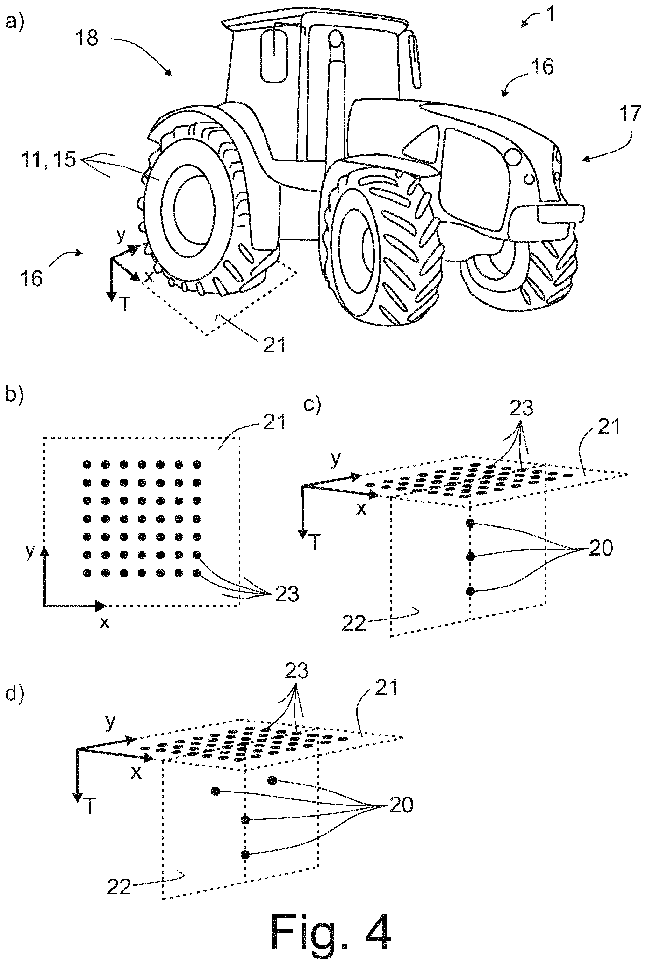

Zusätzlich oder alternativ kann das Fahrerassistenzsystem 5 das Bodenverdichtungsrisiko nach der Berechnungsvorschrift für eine Längsseite 16 und/oder die Vorderseite 17 und/oder die Hinterseite 18 und/oder eine Achse 19 des Anbaugerätes 2 und/oder des Anhängers 3 ermitteln. In Längsrichtung ist eine landwirtschaftliche Arbeitsmaschine 1 üblicherweise symmetrisch aufgebaut, sodass die Ermittlung auf einer Längsseite 16 ausreichen kann. Es kann auch der Fall sein, dass bekannt ist, dass das Bodenverdichtungsrisiko primär von der Hinterachse ausgeht, sodass nur die Hinterseite 18 betrachtet wird. Ebenso kann grundsätzlich jede andere Kombination oder Auswahl der Fahrwerkselemente 11 betrachtet werden. Mit Blick auf Fig. 4 soll nun erläutert werden, wie die Berechnungsvorschrift im Einzelnen zur Ermittlung des Bodenverdichtungsrisikos führt. Das Bodenverdichtungsrisiko wird dabei hier und vorzugsweise im Wesentlichen durch den Bodendruck abgebildet, den die landwirtschaftliche Arbeitsmaschine 1 auf den Boden 10 ausübt. Dieser führt zu einer Verdichtung des Bodens 10 in Abhängigkeit von diversen Bodeneigenschaften.

Hier und vorzugsweise ist vorgesehen, dass die Berechnungsvorschrift eine Berechnung des Bodenverdichtungsrisikos für mindestens eine Tiefe T, vorzugsweise für mindestens zwei Tiefen T, weiter vorzugsweise für mindestens drei Tiefen T, umfasst, und/oder, dass die Berechnungsvorschrift eine Berechnung des Bodenverdichtungsrisikos für höchstens acht Tiefen T, vorzugsweise für höchstens sechs Tiefen T, weiter vorzugsweise für höchstens vier Tiefen T, umfasst.

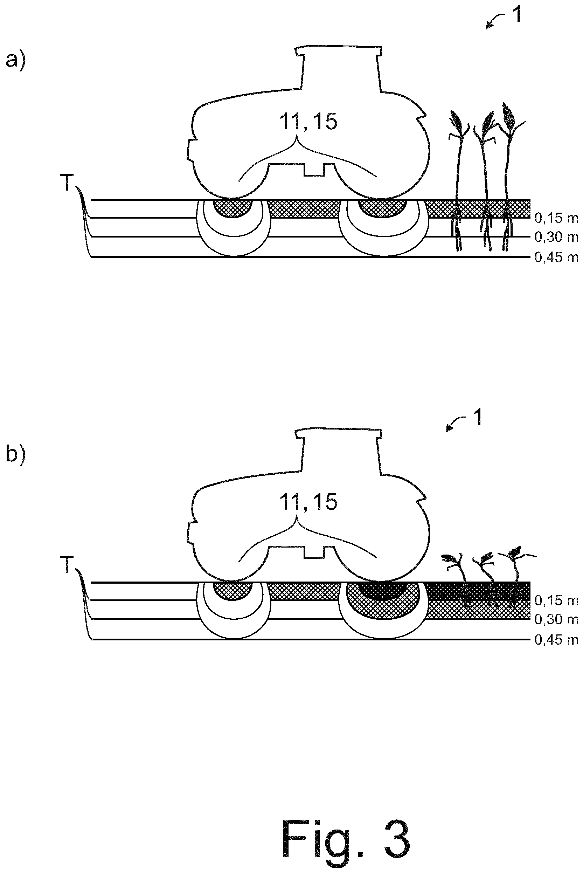

Die Figuren 1 bis 3 zeigen, dass jeweils das Bodenverdichtungsrisiko für drei unterschiedliche Tiefen T dargestellt wird, dort konkret 15 cm, 30 cm und 45 cm. Die Figuren 2 und 3 zeigen dabei diverse Darstellungsmöglichkeiten des Bodenverdichtungsrisikos. Fig. 2a) zeigt einen Traktor mit Anhänger 3, bei dem für vier Fahrwerkselemente 11 das Bodenverdichtungsrisiko nach einem Ampelschema, das hier nur in schwarz und weiß angedeutet ist, dargestellt wird. Unter den Fahrwerkselementen 11 sind zwiebelförmig die Bodendrücke und somit das Bodenverdichtungsrisiko visualisiert. Entgegen der Fahrtrichtung werden diese linienförmig addiert, wodurch sich ganz rechts in den Figuren das Gesamtrisiko ergibt. Die Figuren 2b) und 2c) zeigen nach dem gleichen Prinzip das Risiko lediglich für eine landwirtschaftliche Arbeitsmaschine 1, wobei diese in Fig. 2c) ein Raupenlaufwerk 14 aufweist, das aufgrund seiner mehreren Rollen mehrere Druckzwiebeln aufweist. In Fig. 3 ist zusätzlich in a) ein gutes Pflanzenwachstum und in b) ein gehemmtes Pflanzenwachstum dargestellt, das den Effekt der Bodenverdichtung auf die Pflanzen symbolisiert. In einer bevorzugten Ausführungsform wird das Bodenverdichtungsrisiko mittels eines Piktogramms dargestellt.

Hier und vorzugsweise umfasst die Berechnungsvorschrift eine Berechnung des Bodenverdichtungsrisikos für genau drei Tiefen T. Dabei sind mit den Tiefen T jeweils diskrete, voneinander beabstandete Tiefen T gemeint. Her und vorzugsweise sind diese um mindestens 5 cm voneinander beabstandet. Mit den drei vorliegend gewählten Tiefen T lässt sich das Bodenverdichtungsrisiko insgesamt gut abschätzen. Diese sind abgestimmt zum einen auf übliche, für Pflanzen relevante Tiefen T und zum anderen auf übliche Eindringtiefen von Pflugscharen, die zur Auflockerung des verdichteten Bodens 10 eingesetzt werden können. Mehr Tiefen T führen dabei zwar zu einer höheren Genauigkeit, diese wird jedoch durch eine erhöhte Komplexität in der Darstellung und eine höhere benötigte Rechenleistung bezahlt.

Weiter ist hier und vorzugsweise vorgesehen, dass die Berechnungsvorschrift eine Berechnung des Bodenverdichtungsrisikos bei mindestens einer Tiefe T, vorzugsweise bei mindestens zwei Tiefen T, weiter vorzugsweise bei allen Tiefen T, an höchstens 10 Tiefen-Stützstellen 20, vorzugsweise an höchstens 5 Tiefen-Stützstellen 20, weiter vorzugsweise an höchstens 3 Tiefen-Stützstellen 20, umfasst, vorzugsweise, dass die Tiefen-Stützstellen 20 in einer, insbesondere zur Auflagefläche 21 orthogonalen, Ebene 22 liegen.

Die Tiefen-Stützstellen 20 sind in Fig. 4 dargestellt. Fig. 4 zeigt in a) die Auflagefläche 21 des rechten Hinterreifens eines Traktors mit den Auflageflächen-Dimensionen X, Y. Diese Auflagefläche 21 ist auch in Fig. 4b) bis d) dargestellt. Fig. 4b) zeigt dabei eine Draufsicht auf die Auflagefläche 21. Diese wird in mehrere, noch zu erläuternde Auflage-Stützstellen 23 unterteilt. In Fig. 4c) und 4d) sind drei, respektive vier Tiefen-Stützstellen 20 in T-Richtung gezeigt. Der Hintergrund dabei ist, dass hier und vorzugsweise in der Tiefe T nur dort der Bodendruck und damit das Bodenverdichtungsrisiko ermittelt wird, wo der höchste Druck zu erwarten ist. Dies ist in vielen Fällen in X- und in Y-Richtung, also in Längs- und in Breitenrichtung des Fahrwerkselements 11, mittig (Fig. 4c)).

Der höchste Druck ist jedoch nicht in allen Fällen mittig zu erwarten. Bei Raupenlaufwerken 14 kann unter Zug ein Anstellen des Raupenlaufwerks 14 erfolgen, wodurch der höchste Druck je nach Art des Raupenlaufwerks 14 nach hinten oder nach vorne wandert. Dies wird im Folgenden noch erläutert.

Bei Rädern kann, abhängig vom Reifendruck, der höchste Druck nicht mittig, sondern symmetrisch in Breitenrichtung außen anliegen. Hier und vorzugsweise kann daher mindestens eine Stützstelle, vorzugsweise in der obersten Tiefe T, außermittig, vorzugsweise bei etwa 30 % der Breite des Reifens 15, angeordnet sein. In Fig. 4 sind deshalb vier Tiefen-Stützstellen 20 gezeigt, wobei aufgrund der Symmetrie die Berechnung für drei der Tiefen-Stützstellen 20 ausreicht.

Es ist somit ersichtlich, dass die benötigte Rechenleistung zum Ermitteln des Bodenverdichtungsrisikos aufgrund der lediglich wenigen Tiefen-Stützstellen 20 stark reduziert werden kann.

Die Positionierung, insbesondere in Breitenrichtung, der Tiefen-Stützstellen 20 wird hier und vorzugsweise von dem Fahrerassistenzsystem 5 abhängig von dem Luftdruck des jeweiligen Reifens 15 gewählt. Ein Reifen 15 mit mehr Luftdruck verformt sich anders und drückt daher anders auf den Boden 10 als ein Reifen 15 mit weniger Luftdruck. Zusätzlich oder alternativ kann die Auswahl der Tiefen-Stützstellen 20 abhängig vom Reifentyp und/oder vom Raupenlaufwerkstyp durch das Fahrerassistenzsystem 5 vorgenommen werden.

Somit ist hier und vorzugsweise vorgesehen, dass das Fahrerassistenzsystem 5 die Tiefen-Stützstellen 20 abhängig von einem Reifentyp und/oder einem Raupenlaufwerkstyp auswählt, vorzugsweise, dass die Ebene 22 bei Rädern als Fahrwerkselemente 11 in Längsrichtung mittig unter dem Reifen 15 und orthogonal zur Längsrichtung liegt, und/oder, dass die Ebene 22 bei Raupenlaufwerken 14 als Fahrwerkselemente 11 unter einer den höchsten Bodendruck aufweisenden Rolle jeweiligen Raupenlaufwerks 14 liegt. Je nach Raupenlaufwerk und angenommenem Stillstand oder Zugbelastung kann diese eine mittlere Rolle, die vordere oder die hintere Rolle sein.

Bei Raupenlaufwerken 14 kann auch vorgesehen sein, dass die Stützstellen grundsätzlich in zwei Ebenen 22 liegen, insbesondere, dass eine Ebene 22 dabei für einem statischen Zustand steht und eine Ebene 22 für den dynamischen Zustand.

Weiter ist hier und vorzugsweise vorgesehen, dass die Berechnungsvorschrift die Berücksichtigung, insbesondere die Ermittlung, von Auflagedrücken, an mehreren Auflage-Stützstellen 23 entlang einer Auflagefläche 21 eines Fahrwerkselements 11 in zwei Auflageflächen-Dimensionen X, Y zur Ermittlung des Bodenverdichtungsrisikos, insbesondere pro Tiefen-Stützstelle 20, umfasst, vorzugsweise, dass die Auflage-Stützstellen 23 eine vorgegebene relative Verteilung über die Auflagefläche 21 aufweisen, sodass der Abstand der Auflage-Stützstellen 23 mit der Größe der Auflagefläche 21 skaliert, weiter vorzugsweise, dass die Auflage-Stützstellen 23 äquidistant in beide Auflageflächen-Dimensionen X, Y verteilt sind.

Unter der Berücksichtigung von Auflagedrücken ist zu verstehen, dass die Auflagedrücke nicht explizit ermittelt werden müssen. Es reicht aus, wenn das Bodenverdichtungsrisiko aus den Auflage-Stützstellen 23 ermittelt wird, wofür der Auflagedruck oder ein damit verwandter Wert an mindestens einer Auflage-Stützstelle 23 zwingend zu berücksichtigen ist.

Die Auflage-Stützstellen 23 dienen der Berechnung des Bodendrucks bei den Tiefen-Stützstellen 20, hier und vorzugsweise durch eine Aufsummierung des Einflusses aller Auflage-Stützstellen 23 auf die jeweilige Tiefen-Stützstelle 20. Dafür wird für jede der Auflage-Stützstellen 23 ein Auflagedruck ermittelt und aus empirischen Formeln hergeleitet, wie dieser sich im Boden 10 verteilt. Diese Verteilung im Boden 10 kann dann abhängig von der dreidimensionalen Entfernung zur Tiefen-Stützstelle 20 in einen Bodendruck an der Tiefen-Stützstelle 20 umgerechnet werden und diese Bodendrücke werden aufsummiert.

Um die notwendige Rechenleistung für die Ermittlung des Bodenverdichtungsrisikos konstant zu halten, ist hier und vorzugsweise vorgesehen, dass die Anzahl der Auflage-Stützstellen 23 auch bei unterschiedlichen Größen der Auflagefläche 21 konstant ist. Somit können sich äquidistante Auflage-Stützstellen 23 ergeben, die jedoch variable Abstände zueinander aufweisen. Hier und vorzugsweise sind in Längsrichtung und/oder in Breitenrichtung des Fahrwerkselements 11 mindestens zehn Auflage-Stützstellen 23 vorgesehen. Bei einem Rad sind vorzugsweise höchstens 50, weiter vorzugsweise höchstens 30 Auflage-Stützstellen 23 in Längsrichtung und/oder in Breitenrichtung vorgesehen. Bei einem Raupenlaufwerk 14 sind vorzugsweise mindestens 30 Auflage-Stützstellen 23 in Längsrichtung und/oder vorzugsweise höchstens 100 Auflage-Stützstellen 23 in Längsrichtung, vorzugsweise höchstens 75 Auflage-Stützstellen 23 in Längsrichtung, vorgesehen. Beispielhaft können bei Rädern jeweils 15 Stützstellen in jede Richtung vorgesehen sein und bei Raupenlaufwerken 14 15 Auflage-Stützstellen 23 in Breitenrichtung und 50 Auflage-Stützstellen 23 in Längsrichtung.

Es kann vorgesehen sein, dass das Fahrerassistenzsystem 5 das Bodenverdichtungsrisiko auf einem Display 8 der Benutzerschnittstelle 6 für das mindestens eine Fahrwerkselement 11, vorzugsweise für mindestens zwei Fahrwerkselemente 11, insbesondere Reifen 15 oder Raupenlaufwerke 14, weiter vorzugsweise pro Fahrwerkselement 11, für das ein Bodenverdichtungsrisiko ermittelt wurde, darstellt, vorzugsweise, dass das Fahrerassistenzsystem 5 das Bodenverdichtungsrisiko zwiebelförmig mit einer Schicht pro Tiefe T für das Fahrwerkselement 11, gegebenenfalls jeweils, darstellt.

Die Darstellung der Figuren 1 bis 3 wurde bereits erläutert. Hier und vorzugsweise werden dabei Ampelfarben verwendet.

Konkret ist bevorzugt, dass das Fahrerassistenzsystem 5 das Bodenverdichtungsrisiko auf dem Display 8 mit einer Schicht pro Tiefe T entlang der Längsrichtung der landwirtschaftlichen Arbeitsmaschine 1 darstellt, vorzugsweise, dass die Darstellung der Schichten sich, gegebenenfalls jeweils, in einem dem Fahrwerkselement 11 zugeordneten Bereich abhängig von dem Bodenverdichtungsrisiko des Fahrwerkselements 11 für die jeweilige Schicht, ändert, sodass die aufgrund des Bodenverdichtungsrisikos erwartete Bodenverdichtung dargestellt wird.

Wie bereits erläutert, kann vorgesehen sein, dass das Fahrwerk 9 ein Raupenfahrwerk ist, das als Fahrwerkselemente 11 Raupenlaufwerke 14 aufweist, dass das Fahrerassistenzsystem 5, insbesondere auf Basis der Planung der Feldbearbeitung, eine Zugkraft der landwirtschaftlichen Arbeitsmaschine 1 bei der Ermittlung des Bodenverdichtungsrisikos in der Berechnungsvorschrift berücksichtigt, vorzugsweise, dass das Fahrerassistenzsystem 5 ein Aufstellen der Raupenlaufwerke 14 durch die Zugkraft annimmt und in der Berechnungsvorschrift berücksichtigt.

Die Zugkraft der landwirtschaftlichen Arbeitsmaschine 1 führt zu einem Aufstellen des Raupenlaufwerks 14 und somit zu einer anderen Belastung des Bodens 10 als bei einem statischen Raupenlaufwerk 14. Aufgrund der bekannten oder abschätzbaren Stützkräfte am Anbaugerät 2 und der Achsballastierung der landwirtschaftlichen Arbeitsmaschine 1 kann das aufstellende Verhalten des Raupenlaufwerks 14 hinreichend gut berücksichtigt werden. Die Zuglastabschätzung kann weiterhin aus der Geschwindigkeit der landwirtschaftlichen Arbeitsmaschine 1 und der Motorauslastung oder aus der Fahrgetriebeauslastung durch eine Getriebeausgangsdrehmomentabschätzung ermittelt werden. Alternativ ist ein Zuglastmesssystem möglich.

Das Aufstellen des Raupenlaufwerks 14 wird hier und vorzugsweise dadurch berücksichtigt, dass die Ebene 22 der Tiefen-Stützstellen 20, wie erwähnt, entlang der Längsrichtung des Raupenlaufwerks 14 nach hinten verlagert wird.

Beansprucht wird außerdem gemäß einer weiteren Lehre, der eigenständige Bedeutung zukommt, ein Verfahren zur Ermittlung eines Bodenverdichtungsrisikos, wobei das Bodenverdichtungsrisiko mittels des Fahrerassistenzsystems 5 einer vorschlagsgemäßen landwirtschaftlichen Arbeitsmaschine 1 ermittelt wird.

Auf alle Ausführungen zu der vorschlagsgemäßen landwirtschaftlichen Arbeitsmaschine 1 darf verwiesen werden.

Bevorzugt ist es bei der weiteren Lehre so, dass die Planungsroutine mittels des Fahrerassistenzsystems 5 durchgeführt wird, wobei der Benutzer 12 dialogbasiert Eingaben tätigt und das Fahrerassistenzsystem 5 zusätzlich das Bodenverdichtungsrisiko anzeigt. Vorzugsweise tätigt der Benutzer 12 dafür keine weiteren Eingaben, die nicht für die Planung notwendig sind.

### Bezugszeichenliste

- 1: landwirtschaftliche Arbeitsmaschine
- 2: Anbaugerät
- 3: Anhänger
- 4: Heckkraftheber
- 5: Fahrerassistenzsystem
- 6: Benutzerschnittstelle
- 7: Terminal
- 8: Display
- 9: Fahrwerk
- 10: Boden
- 11: Fahrwerkselement
- 12: Benutzer
- 13: Arbeitsaggregat
- 14: Raupenlaufwerk
- 15: Reifen
- 16: Längsseite
- 17: Vorderseite
- 18: Hinterseite
- 19: Achse
- 20: Tiefen-Stützstelle
- 21: Auflagefläche
- 22: Ebene
- 23: Auflage-Stützstelle
- T: Tiefe
- X, Y: Auflageflächen-Dimensionen

## Patentansprüche

1. Landwirtschaftliche Arbeitsmaschine zur Feldbearbeitung, wobei die landwirtschaftliche Arbeitsmaschine (1) zur Feldbearbeitung mit einem Anbaugerät (2) bestückt und/oder mit einem Anhänger (3) verbunden werden kann, wobei die landwirtschaftliche Arbeitsmaschine (1) ein Fahrerassistenzsystem (5) aufweist, wobei das Fahrerassistenzsystem (5) eine Benutzerschnittstelle (6) aufweist, wobei die landwirtschaftliche Arbeitsmaschine (1) ein Fahrwerk (9) mit den Boden (10) kontaktierenden Fahrwerkselementen (11) aufweist,
wobei das Fahrerassistenzsystem (5) in einer Planungsroutine dialogbasiert eine Planung der Feldbearbeitung erstellt und in einer Durchführungsroutine, insbesondere basierend auf der Planung der Feldbearbeitung in der Planungsroutine, mindestens ein Arbeitsaggregat (13) der landwirtschaftlichen Arbeitsmaschine (1) durch Einstellung von Maschinenparametern an dem Arbeitsaggregat (13) steuert und/oder regelt,
wobei das Fahrerassistenzsystem (5) basierend auf der Planung der Feldbearbeitung ein Bodenverdichtungsrisiko der Feldbearbeitung durch die landwirtschaftliche Arbeitsmaschine (1) nach einer Berechnungsvorschrift ermittelt und dem Benutzer (12) über die Benutzerschnittstelle (6) anzeigt.

2. Landwirtschaftliche Arbeitsmaschine nach Anspruch 1, **dadurch gekennzeichnet, dass** in der Planungsroutine der Benutzer (12) eine Eingabe, insbesondere eine Auswahl, mindestens einer Bodeneigenschaft vornimmt, dass das Fahrerassistenzsystem (5) das Bodenverdichtungsrisiko nach der Berechnungsvorschrift basierend auf der Bodeneigenschaft ermittelt, vorzugsweise, dass die mindestens eine Bodeneigenschaft einen Tonanteil und/oder eine Bodenfeuchtigkeit und/oder einen Humusanteil als Bodeneigenschaft umfasst.

3. Landwirtschaftliche Arbeitsmaschine nach Anspruch 1 oder 2, **dadurch gekennzeichnet, dass** das Fahrerassistenzsystem (5) das Bodenverdichtungsrisiko nach der Berechnungsvorschrift weiterhin basierend auf einem Gewicht der landwirtschaftlichen Arbeitsmaschine (1) und/oder des Anbaugerätes (2) und/oder des Anhängers (3) und/oder basierend auf einer Achsballastierung, insbesondere einer in der Planungsroutine von dem Fahrerassistenzsystem (5) empfohlenen Achsballastierung, und/oder basierend auf einem Luftdruck eines Reifens (15) der landwirtschaftlichen Arbeitsmaschine (1), insbesondere einem in der Planungsroutine von dem Fahrerassistenzsystem (5) empfohlenen Luftdruck, ermittelt.

4. Landwirtschaftliche Arbeitsmaschine nach einem der vorhergehenden Ansprüche, **dadurch gekennzeichnet, dass** das Fahrerassistenzsystem (5) das Bodenverdichtungsrisiko nach der Berechnungsvorschrift weiterhin basierend auf mindestens einer Achslast der landwirtschaftlichen Arbeitsmaschine (1) ermittelt, vorzugsweise, dass die Achslast eine gemessene oder eine geschätzte Achslast ist, weiter vorzugsweise, dass das Fahrerassistenzsystem (5) die geschätzte Achslast basierend auf einem Gewicht und/oder einer Achslast und/oder einem Schwerpunkt des Anbaugerätes (2) und/oder Maschinenparametern einer Schnittstelle, insbesondere eines Heckkrafthebers (4), der landwirtschaftlichen Arbeitsmaschine (1), über die das Anbaugerät (2) mit der landwirtschaftlichen Arbeitsmaschine (1) verbunden ist, schätzt.

5. Landwirtschaftliche Arbeitsmaschine nach einem der vorhergehenden Ansprüche, **dadurch gekennzeichnet, dass** das Fahrerassistenzsystem (5) dem Benutzer (12) mindestens einen Vorschlag zur Reduktion des Bodenverdichtungsrisikos basierend auf dem ermittelten Bodenverdichtungsrisiko anzeigt, und/oder, dass das Fahrerassistenzsystem (5) das Bodenverdichtungsrisiko automatisiert und/oder nach Annahme eines Vorschlages durch den Benutzer (12) durch Einstellung mindestens eines Maschinenparameters an der landwirtschaftlichen Arbeitsmaschine (1) und/oder dem Anbaugerät (2) und/oder dem Anhänger (3) verringert.

6. Landwirtschaftliche Arbeitsmaschine nach einem der vorhergehenden Ansprüche, **dadurch gekennzeichnet, dass** das Fahrerassistenzsystem (5) die Abarbeitung der Berechnungsvorschrift und vorzugsweise die komplette Ermittlung des Bodenverdichtungsrisikos auf Hardware der landwirtschaftlichen Arbeitsmaschine (1) vornimmt.

7. Landwirtschaftliche Arbeitsmaschine nach einem der vorhergehenden Ansprüche, **dadurch gekennzeichnet, dass** das Fahrerassistenzsystem (5) das Bodenverdichtungsrisiko nach der Berechnungsvorschrift für mindestens ein Fahrwerkselement (11) separat ermittelt, vorzugsweise, dass das Fahrerassistenzsystem (5) das Bodenverdichtungsrisiko nach der Berechnungsvorschrift für alle Fahrwerkselemente (11) einer Längsseite (16) und/oder der Vorderseite (17) und/oder der Hinterseite (18) und/oder einer Achse (19) der landwirtschaftlichen Arbeitsmaschine (1) ermittelt.

8. Landwirtschaftliche Arbeitsmaschine nach einem der vorhergehenden Ansprüche, **dadurch gekennzeichnet, dass** die Berechnungsvorschrift eine Berechnung des Bodenverdichtungsrisikos für mindestens eine Tiefe (T), vorzugsweise für mindestens zwei Tiefen (T), weiter vorzugsweise für mindestens drei Tiefen (T), umfasst, und/oder, dass die Berechnungsvorschrift eine Berechnung des Bodenverdichtungsrisikos für höchstens acht Tiefen (T), vorzugsweise für höchstens sechs Tiefen (T), weiter vorzugsweise für höchstens vier Tiefen (T), umfasst.

9. Landwirtschaftliche Arbeitsmaschine nach Anspruch 8, **dadurch gekennzeichnet, dass** die Berechnungsvorschrift eine Berechnung des Bodenverdichtungsrisikos bei mindestens einer Tiefe (T), vorzugsweise bei mindestens zwei Tiefen (T), weiter vorzugsweise bei allen Tiefen (T), an höchstens 10 Tiefen-Stützstellen (20), vorzugsweise an höchstens 5 Tiefen-Stützstellen (20), weiter vorzugsweise an höchstens 3 Tiefen-Stützstellen (20), umfasst, vorzugsweise, dass die Tiefen-Stützstellen (20) in einer, insbesondere zur Auflagefläche (21) orthogonalen, Ebene (22) liegen.

10. Landwirtschaftliche Arbeitsmaschine nach Anspruch 9, **dadurch gekennzeichnet, dass** das Fahrerassistenzsystem (5) die Tiefen-Stützstellen (20) abhängig von einem Reifentyp und/oder einem Raupenlaufwerkstyp auswählt, vorzugsweise, dass die Ebene (22) bei Rädern als Fahrwerkselemente (11) in Längsrichtung mittig unter dem Reifen (15) und orthogonal zur Längsrichtung liegt, und/oder, dass die Ebene (22) bei Raupenlaufwerken (14) als Fahrwerkselemente (11) unter einer den höchsten Bodendruck aufweisenden Rolle des jeweiligen Raupenlaufwerks (14) liegt.

11. Landwirtschaftliche Arbeitsmaschine nach einem der vorhergehenden Ansprüche, **dadurch gekennzeichnet, dass** die Berechnungsvorschrift die Berücksichtigung, insbesondere die Ermittlung, von Auflagedrücken, an mehreren Auflage-Stützstellen (23) entlang einer Auflagefläche (21) eines Fahrwerkselements (11) in zwei Auflageflächen-Dimensionen (X, Y) zur Ermittlung des Bodenverdichtungsrisikos, insbesondere pro Tiefen-Stützstelle (20), umfasst, vorzugsweise, dass die Auflage-Stützstellen (23) eine vorgegebene relative Verteilung über die Auflagefläche (21) aufweisen, sodass der Abstand der Auflage-Stützstellen (23) mit der Größe der Auflagefläche (21) skaliert, weiter vorzugsweise, dass die Auflage-Stützstellen (23) äquidistant in beide Auflageflächen-Dimensionen (X, Y) verteilt sind.

12. Landwirtschaftliche Arbeitsmaschine nach einem der Ansprüche 7 bis 11, **dadurch gekennzeichnet, dass** das Fahrerassistenzsystem (5) das Bodenverdichtungsrisiko auf einem Display (8) der Benutzerschnittstelle (6) für das mindestens eine Fahrwerkselement (11), vorzugsweise für mindestens zwei Fahrwerkselemente (11), insbesondere Reifen (15) oder Raupenlaufwerke (14), weiter vorzugsweise pro Fahrwerkselement (11), für das ein Bodenverdichtungsrisiko ermittelt wurde, darstellt, vorzugsweise, dass das Fahrerassistenzsystem (5) das Bodenverdichtungsrisiko zwiebelförmig mit einer Schicht pro Tiefe (T) für das Fahrwerkselement (11), gegebenenfalls jeweils, darstellt.

13. Landwirtschaftliche Arbeitsmaschine nach Anspruch 12, **dadurch gekennzeichnet, dass** das Fahrerassistenzsystem (5) das Bodenverdichtungsrisiko auf dem Display (8) mit einer Schicht pro Tiefe (T) entlang der Längsrichtung der landwirtschaftlichen Arbeitsmaschine (1) darstellt, vorzugsweise, dass die Darstellung der Schichten sich, gegebenenfalls jeweils, in einem dem Fahrwerkselement (11) zugeordneten Bereich abhängig von dem Bodenverdichtungsrisiko des Fahrwerkselement (11) für die jeweilige Schicht, ändert, sodass die aufgrund des Bodenverdichtungsrisikos erwartete Bodenverdichtung dargestellt wird.

14. Landwirtschaftliche Arbeitsmaschine nach einem der vorhergehenden Ansprüche, **dadurch gekennzeichnet, dass** das Fahrwerk (9) ein Raupenfahrwerk ist, das als Fahrwerkselemente (11) Raupenlaufwerke (14) aufweist, dass das Fahrerassistenzsystem (5), insbesondere auf Basis der Planung der Feldbearbeitung, eine Zugkraft der landwirtschaftlichen Arbeitsmaschine (1) bei der Ermittlung des Bodenverdichtungsrisikos in der Rechenvorschrift berücksichtigt, vorzugsweise, dass das Fahrerassistenzsystem (5) ein Aufstellen der Raupenlaufwerke (14) durch die Zugkraft annimmt und in der Rechenvorschrift berücksichtigt.

15. Verfahren zur Ermittlung eines Bodenverdichtungsrisikos, wobei das Bodenverdichtungsrisiko mittels des Fahrerassistenzsystems (5) einer landwirtschaftlichen Arbeitsmaschine (1) nach einem der vorhergehenden Ansprüche ermittelt wird.
